(19) Europäisches Patentamt

European Patent Office

Office européen des brevets

(11) EP 3 845 277 A1

(12) **EUROPEAN PATENT APPLICATION**

(43) Date of publication:
07.07.2021 Bulletin 2021/27

(51) Int Cl.:
A62C 3/06 (2006.01)
B64D 37/32 (2006.01)
B60K 15/077 (2006.01)

(21) Application number: 20275001.4

(22) Date of filing: 03.01.2020

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
KH MA MD TN

(71) Applicant: BAE SYSTEMS plc
London SW1Y 5AD (GB)

(72) Inventor: **The designation of the inventor has not yet been filed**

(74) Representative: **BAE SYSTEMS plc**
**Group IP Department**
**Warwick House**
**P.O. Box 87**
**Farnborough Aerospace Centre**
**Farnborough Hampshire GU14 6YU (GB)**

(54) **FUEL TANK**

(57)    There is provided a fuel tank system comprising a fuel tank; and a lattice in the fuel tank for impeding the propagation of a flame front within the fuel tank, the lattice defining a plurality of openings to allow a fluid to pass through.

Figure 3A

## Description

FIELD

The present disclosure relates to a fuel tank system with improved flame prevention.

BACKGROUND

Arcing and sparking is a dangerous problem in aircrafts. Arcing or sparking may occur in a fuel tank storing fuel and fuel vapour, which risks the projection of sparks, molten material and/or hot gasses into the fuel tank, with the consequent danger of ignition of flammable fuel.

It can be extremely difficult to prevent ignition sources from occurring. One reason for this is that there are a number of possible reasons why an ignition spark may occur.

These ignition sources may result during a lightning strike to an aircraft.

A previous method for reducing the likelihood of a flame front forming in a fuel tank is to include a foam in the fuel tank. The fuel may flow through the foam and the foam may absorb energy from a flame front to prevent the flame from propagating and developing. However, the presence of foam significantly reduces the available volume for fuel. Further, foam offers no structural support for the fuel tank.

Alternatively, or in addition, traditional fuel tanks may use ribs or spars to provide structural support for the fuel tank. These are these may be heavy and take up volume within the fuel tank, which results in a reduced volume within the fuel tank for fuel.

Considerable efforts have been made to provide a solution to this problem, but so far none have been provided in entirely satisfactory in terms of technical efficiency, reliability and ease and cheapness of manufacture.

SUMMARY

According to a first aspect of the present disclosure, there is provided a fuel tank system comprising: a fuel tank; and a lattice or 3 dimensional mesh structure hereafter referred to as a lattice, in the fuel tank for impeding the propagation of a flame front within the fuel tank, the lattice defining a plurality of openings to allow a fluid to pass through.

The provision of a lattice within the fuel tank provides a mechanism for preventing or reducing the propagation of a flame front, without the need to provide foam, which takes up a lot of volume within the fuel tank. As such, the fuel tank will be able to hold more fuel, whilst also having a high safety factor.

The lattice may also provide structural support for the fuel tank and so remove the requirement for internal structures within the fuel tank, which would take up volume. The lattice may also reduce fuel sloshing within the fuel tank.

In one example the lattice comprises a porosity of between approximately 50% to 95%. Providing a porosity of between approximately 50% to 95% allows more fuel or fluid to pass through the lattice compared with traditional materials. As such, there is less impedance of fuel/fuel vapour within the fuel tank.

In one example, the lattice is regular. This improves the ease of manufacture of the lattice.

In another example, the lattice is irregular. The provision of an irregular lattice may allow shapes that have increased load bearing within the fuel tank. Further, providing an irregular shape enables more fuel to be provided within the fuel tank.

In one example, the openings defined by the lattice are between approximately 3mm x 3mm x 3mm to approximately 20mm x 20mm x 20mm.

Openings of this size are provided to limit propagation of flame.

In one example the wherein the lattice is arranged adjacent to a joint within the fuel tank. Ignition sources are most likely to develop at a joint within the fuel tank and so providing the lattice adjacent to these areas is more effective.

In one example, the lattice is finer in a region adjacent to the joint in the fuel tank and coarser in a region further away from the joint. As mentioned above, ignition sources are most likely to develop at a joint within a fuel tank and so making the lattice coarser further away from the joint means that more fuel could be held in the fuel tank. In other words, localised flame retardation is provided.

In one example, the lattice is 3D printed.

In one example, the lattice comprises a nylon, a sintered plastic or a sintered metal. The lattice comprises one or more of: nylon, PEEK, PET/ PETG, Polycarbonate, polypropylene, PLA, ABS, ASA, a sintered plastic, and/or a sintered metal.

The lattice may be coated in an electrically conductive substance to dissipate electrostatic charge.

In one example, the lattice is adhered to a skin of the fuel tank. This makes the manufacturing of the lattice easier.

In one example, the lattice is configured to provide a structural support to the fuel tank.

The lattice may be configured to span between two sides of the fuel tank.

The lattice may be configured to span throughout the whole of the fuel tank.

According to one aspect, there is provided an aircraft comprising a fuel tank system according to any one of the preceding claims.

In one example, there is provided a fuel tank system comprising: a fuel tank; and a lattice or 3 dimensional mesh structure hereafter referred to as a lattice, in the fuel tank for impeding the propagation of a flame front within the fuel tank, the lattice defining a plurality of openings to allow a fluid to pass through, in use.

The fluid may comprise a fuel or a fuel vapour.

It will be appreciated that features described in relation to one aspect of the present disclosure can be incorporated into other aspects of the present disclosure. For example, an apparatus of the disclosure can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

BRIEF DESCRIPTION OF THE DRAWINGS

Embodiments of the disclosure will now be described by way of example only and with reference to the accompanying drawings.

Figure 1 is an illustrative example of an aircraft including a fuel tank;

Figure 2 is an illustrative example of a part of a fuel tank showing possible ignition sources;

Figure 3A shows an example of a fuel tank system including the fuel tank and a lattice;

Figure 3B shows an example a lattice in more detail;

Figure 4 shows another example of a fuel system including a fuel tank and a lattice;

Figure 5A shows another example of a fuel system including a fuel tank and a lattice;

Figure 5B shows an example a lattice in more detail;

Figure 6 shows another example of a fuel system including a fuel tank and a lattice; and

Figure 7 shows another example of a fuel system including a fuel tank and a lattice.

For convenience and economy, the same reference numerals are used in different figures to label identical or similar elements.

DETAILED DESCRIPTION

Generally, embodiments herein relate to a fuel tank system for inhibiting a flame front from propagating within a fuel tank.

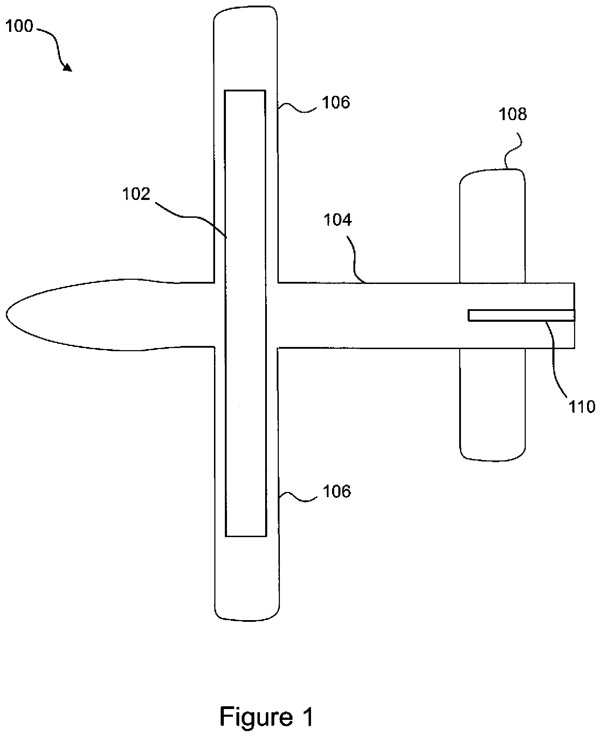

Figure 1 shows an illustrative example of an aircraft 100 comprising a fuel tank 102. While an aircraft 100 is shown here, it would be readily appreciated that the present invention is applicable to other types of devices using a fuel tank 102, such as cars, ships, spacecraft, airships and trains.

The aircraft 100 includes a wing member 106 coupled to a fuselage 104. To aerodynamically balance the aircraft 100, a horizontal tail plane 108 and a vertical tail fin (or vertical stabilizer) 110 may be coupled to the rear of the fuselage 104. The aircraft 100 includes one or more engines (not shown) and may include one or more propellers.

The aircraft 100 may be composed of a carbon fibre laminate skin structure. In other words, the skin forms the aircraft's body. In other embodiments, the body is substantially made of a lightweight metal, such as titanium, titanium alloy, aluminium or aluminium alloy.

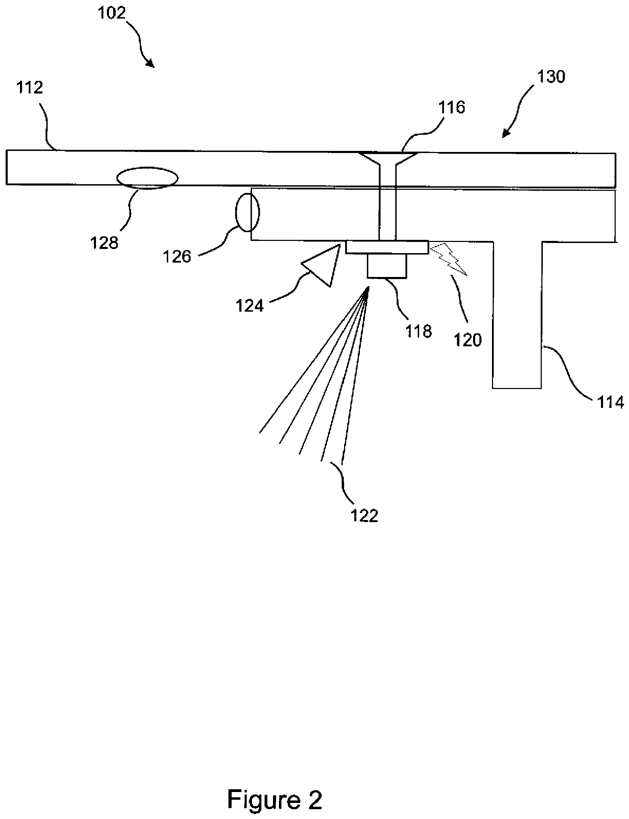

Figure 2 shows an example of a part of a fuel tank 102. In this example, the fuel tank 102 comprises a skin 112 that acts as a limit or boundary of the fuel tank 102 and separates the fuel or fuel vapour/air mixture from the air. The fuel tank 102 may comprise an internal structure 114 to support the skin 112 of the fuel tank 102. The fuel tank 102 may be coupled to the internal structure 114 at a joint 130. In other words, the joint 130 is the coupling location between the skin 112 of the fuel tank 102 and the internal structure 114 within the fuel tank 102. The internal structure 114 may comprise a support member, such as a wall or column, that abuts the skin 112 to provide structural support to the skin 112 and acts to keep the fuel tank 102 in the correct shape.

The internal structure 114 may be coupled to the skin 112 via a fixture 116, such as a bolt and, in some cases, a nut and washer 118 arrangement. Other fixtures 116, such as a dowel or screw may be used.

In some examples, the skin 112 comprises a carbon or carbon fibre composite. In one example, the internal structure 114 may be formed of aluminium or titanium.

In figure 2, a number of possible ignition sources have been indicated. One possible ignition source is an arc 120. An electric arc 120, or arc discharge, is an electrical breakdown of a gas that produces a prolonged electrical discharge. A current is formed through a normally nonconductive medium such as air and produces a plasma, which may produce visible light. A very high current level passes through a relatively small space resulting in a very high temperatures developing over a short period of time. The very high temperatures may ignite the fuel vapour within the fuel tank 102, which may then develop a flame front. An arc 120 may form between various components within the fuel tank 102, for example, due to manufacturing imperfections.

Another possible cause of a flame front to develop within a fuel tank 102 is a thermal spark 122. This occurs when bits of burning material, such as a metal, near a join in a fuel tank 102 are produced. The burning material may be produced due to an arc between the bolt and the structure with the plasma and eroded material being escaping into the fuel tank, or due to high magnetic fields due to the local geometry.

Hot gas plumes 124 may be another cause of a flame front within a fuel tank 102. A hot gas plume is generated by gas projecting from a heat source, for example due to an arc between the bolt and the structure with the plasma and eroded material being escaping into the fuel tank. The hot gas may expand due to thermal expansion and project into a cooler region of the fuel tank 102, or by the gas being under high pressure, thereby igniting fuel vapour.

Edge glow 126 may be another possible ignition source. Edge glow 126 may result from a manufacturing imperfection of a material that causes a local region in the material to heat to a high temperature.

A hot spot 128 may develop in the skin 112 of the fuel tank 102. The hot spot 128 may result from a lightning strike or such to the aircraft 100, which may cause a localised heating to develop within the aircraft 100.

The above examples are merely examples of ignition sources of fuel vapour or fuel within a fuel tank 102 and other ignition sources may cause the fuel vapour or fuel to ignite.

The fuel vapour within the fuel tank 102 has a flash point, which is the threshold temperature at which the vapour of the fuel will ignite given an ignition source. The fuel vapour also has a fire point, which is the lowest temperature at which vapours of the material will keep burning after the ignition source is removed.

The fire point is higher than the flash point, because at the flash point more vapor may not be produced rapidly enough to sustain combustion.

If the fuel vapour is subject to any of the above-mentioned ignition sources then it may combust as the temperature may be above the flash point and the fire point. In the event of combustion, a flame front will develop in the fuel tank 102.

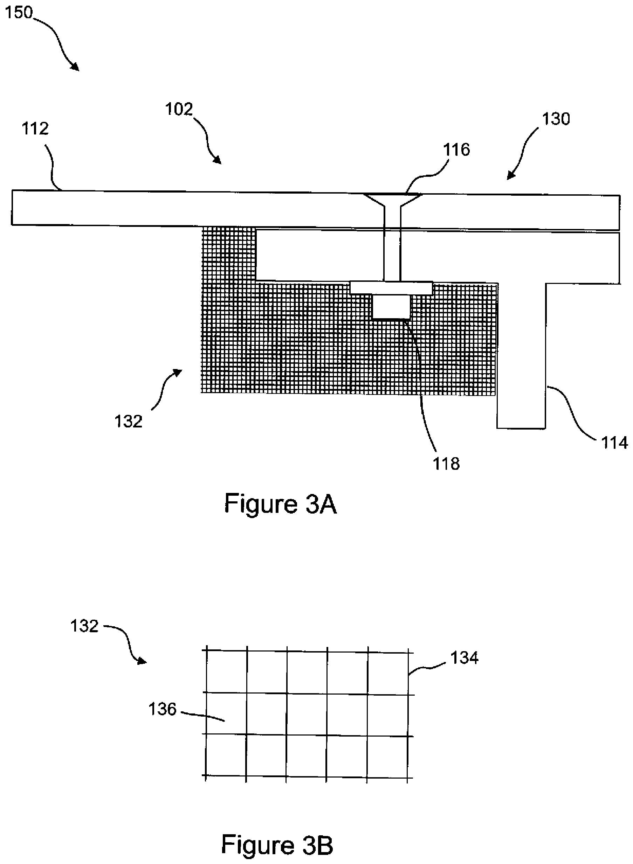

Figure 3A shows an example of a fuel tank system 150 including the fuel tank 102 and a lattice 132 in the fuel tank 102. The lattice 132 is for impeding the propagation of a flame front within the fuel tank 102.

In one example, the lattice 132 is located substantially throughout the whole of the internal volume of the fuel tank 102. In other examples, the lattice 132 is only located in the region adjacent to the joint 130 in the fuel tank 102 as this is the region that an ignition source is most likely to originate.

Figure 3B shows an example of the lattice 132 in more detail. The lattice is formed of a mesh-like structure comprising connecting elements 134, which define a plurality of openings 136 or voids. The plurality of openings 136 allow a fluid, such as a fuel or a fuel vapour to pass through. The lattice 132 may be considered to be a frame-work of connecting elements 134.

The presence of the lattice 132 inhibits the propagation of a flame front that may develop in the fuel vapour. The lattice 132 inhibits the propagation of the flame front by absorbing energy from the flame front, thereby reducing the temperature of the flame front. In other words, the lattice 132 reduces the temperature of the flame front to below the fire point of the fuel vapour. The absorbed energy may be distributed through the lattice 132 away from the location of the flame front. The lattice 132 comprises a high surface area and so is suitable for absorbing a high level of energy from the flame front. Further, unlike foams, lattices 132 would not deteriorate or deform over time.

The presence of the lattice 132 improves efficacy of the fuel tank system 150. Further, it reduces weight of the fuel tank system 150.

The connecting elements 134 may have a length of between approximately 3mm to 20mm, more preferably 4mm to 10mm, more preferably 5mm. Further, the connecting elements 134 may have a width or diameter of approximately 0.5mm to 1.5mm, more preferably 1mm. In one example, the connecting elements 134 may have a width or diameter less than 20% of the length of the connecting element 134.

In the example shown in Figures 3A and 3B, the lattice 132 comprises an orthogonal arrangement or connecting elements 134, that is to say that the connecting elements 134 are arranged in a parallel and perpendicular arrangement. However, as will be described later, other arrangements are possible.

In this example, the connecting elements 134 form a lattice 132 or 3D grid. The plurality of voids each have a width, height and depth of approximately 3mm to 20mm, more preferably 4mm to 10mm, more preferably 5mm. These sizes of plurality of openings enable sufficient heat to be absorbed from a flame front, whilst also providing sufficient size of voids in the fuel tank 102 for the fuel to pass through.

The porosity of an object is defined by:

$$(Volume\ of\ Voids/Total\ Volume)\ x\ 100.$$

In the example of the arrangement shown in Figure 3B and the example in which the connecting members 134 have a width of 1mm and the plurality of openings have a width of 5mm, then the total volume of one rectangular block within the lattice will be 6mm x 6mm x 6mm = 216mm$^3$.

The total volume of the connecting members 134 within one block of the lattice 132 is (1x1x6) + (1x1x5) + (1x1x5) = 16mm$^3$.

Therefore, in this example, the total volume of voids is 216mm$^3$ - 16mm$^3$ = 200mm$^3$.

Therefore, the porosity of the lattice 132 for this example is (200/216) x 100 = 93%

In one example, the lattice 132 has a porosity of between approximately 50% to 95%. In another example, the lattice has a porosity of at least 70%. In one example the lattice 132 has a porosity of at least 80%, more preferably at least 90%. In one example, the porosity of the lattice 132 is approximately 95%.

Providing a lattice 132 with a porosity of above 50% is above means that the fuel or fuel vapour can flow through the fuel tank 102 without being significantly impeded, especially when compared with traditional fuel tanks that utilise foam. As such, fuel tanks 102 may be able to store more fuel in a safe manner in which a flame front will be inhibited from propagating. The lattice 132 only takes up a small amount of overall volume of the fuel tank 102 and so the majority of the volume of the fuel tank 102 can be used for storing fuel.

The lattice 132 may have a regular repeating pattern, i.e. as shown in Figure 3B. In one example, the lattice 132 is arranged such that the connecting members 134 are arranged in a cubic or quasi cubic shape. The lattice 132 may have a continuous recurring structure.

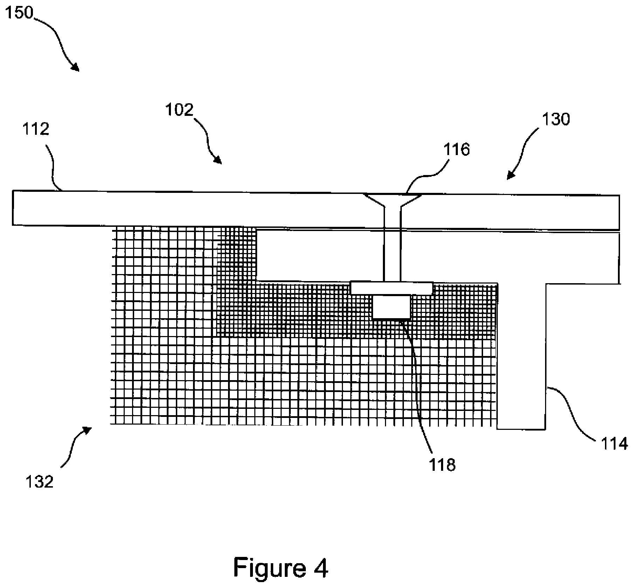

Figure 4 shows an alternative example of a fuel tank system 150 including a fuel tank 102 and a lattice 132. In this example, the lattice 132 comprises a finer mesh in the region of a joint 130 and a relatively coarser mesh in a region further away from the joint 130. That is to say that the size of the plurality of voids is smaller relatively closer to the joint 130 and relatively larger at a distance further away from the joint 130.

The reason for this is that a flame front is more likely to develop in the vicinity of the joint compared with a region further away from the joint. As such, making the lattice 132 that is relatively coarser further away from the joint 130 enables more fuel or fuel vapour to be located within the fuel tank 102.

As an alternative to the lattice 132 shown in Figure 4, the lattice 132 may become gradually coarser as the lattice 132 moves further away from the joint 130. In other words, the lattice may be irregular and the size of the plurality of openings 136 steadily increases with the distance away from the joint 130. Therefore, there would be more available volume for fuel further away from the joint 130.

In one example (not shown), the lattice 132 may be substantially truss-shaped, i.e. be formed of a plurality of connecting members 134 that form rectangular and/or triangular openings 136. In one example, the plurality of connecting members 134 form a plurality of tetrahedrons.

In one example, the lattice 132 is located in the regions of the fuel tank 102 in which the fuel vapour may be located.

The presence of the lattice 132 adds an additional safety mechanism within the aircraft 100 for preventing a fire/failure. Therefore, the fuel tank system 150 according to this disclosure provides redundancy for civil certification.

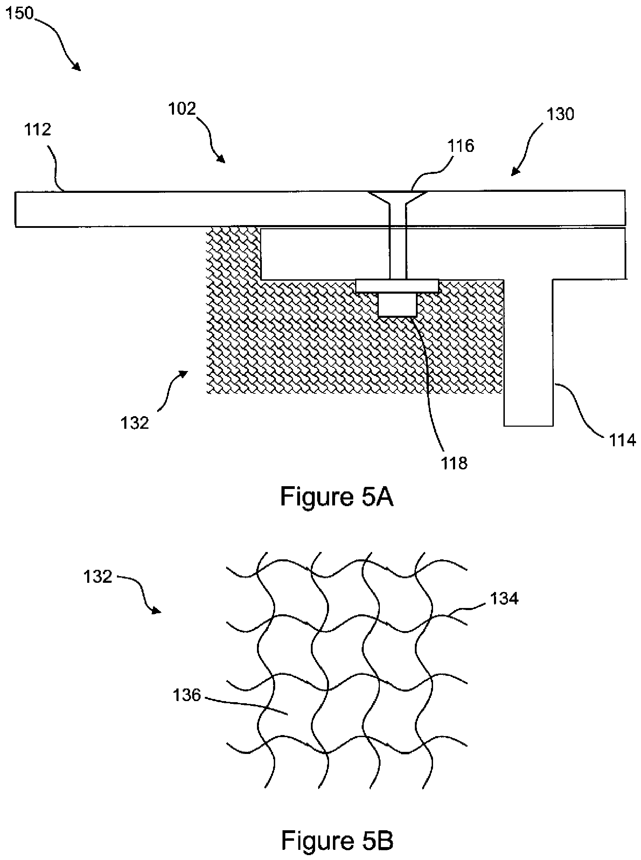

Figures 5A shows a fuel tank system 150 comprising an alternative arrangement of the lattice 132. In this example, the lattice 132 has a repeating, irregular shape. For example, the connecting members 134 may have a substantially sinusoidal shape. An example of the alternative lattice 132 is shown in Figure 5B.

As with the example shown in Figure 4, this lattice 132 may be relatively finer closer to the joint 130 and relatively coarser further from the joint 130. That is to say that the size of the openings 136 may increase further from the location of the joint 130.

A lattice 132 taking an irregular form will impede the propagation of a flame front within the fuel tank 102 because is will absorb energy from the flame front. In other words, as a flame front is developed, heat energy will transfer from the fuel vapour to the lattice 132, thereby reducing the temperature of the fuel vapour. Reducing the temperature of the fuel vapour means that the flame front is less likely to propagate, thereby increasing safety with the fuel tank system 150.

In one example, the lattice 132 may be 3D printed. 3D printing allows for the precise correct shape of the lattice 132 to be created. As disclosed above, the lattice 132 may have smaller openings 136 closer to a joint 130 compared with further from the joint 130. 3D printing offers a convenient method for creating complex shapes required.

In one example, the lattice comprises one or more of: nylon, PEEK, PET/ PETG, Polycarbonate, polypropylene, PLA, ABS, ASA, a sintered plastic, and/or a sintered metal. The polymer bases materials may be unloaded or carbon or metal loaded. In other examples, the lattice 132 may be formed of other materials used in 3D printing.

This material is particular suited for use in 3D printing whilst also being able to absorb heat from a flame front, thereby impeding the propagation of a flame front.

In one example, the connecting members 134 of the lattice 132 may have a coating. The purpose of the coating is to make the lattice 132 slightly conductive. Providing a coating that is slightly conductive reduces the risk of electrostatic charging on surface of the lattice. The slightly conductive coating is able to dissipate this electro-static charge.

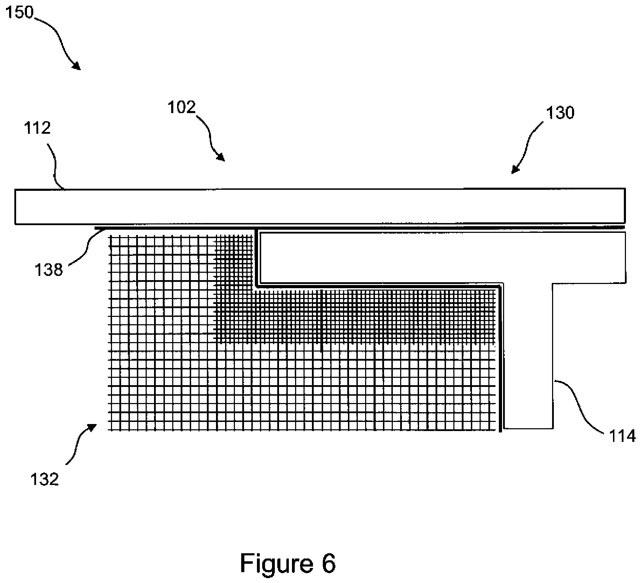

Figure 6 shows an example of the fuel tank system in which the lattice is coupled to the skin 112 via an adhesive 138. The adhesive 138 may also be used to adhere the lattice 132 to the internal structure 114 of the fuel tank 102. The adhesive 138 ensures that the lattice 132 would be fixed relative to the fuel tank 102 and so would be held in place in the desired position within the fuel tank 102. In this example, the fixture 116 and a nut and washer 118 arrangement has been removed as the adhesive 138 may also be used to couple the internal structure 114 to the skin 112 of the fuel tank 102. However, in other examples, the adhesive 138 may be used in addition to an additional fixture arrangement such as the fixture 116, nut and washer 118 arrangement.

In addition to reducing the likelihood of flame propagation through the fuel tank system 150, the lattice 132 may act as a structural support to the fuel tank 102.

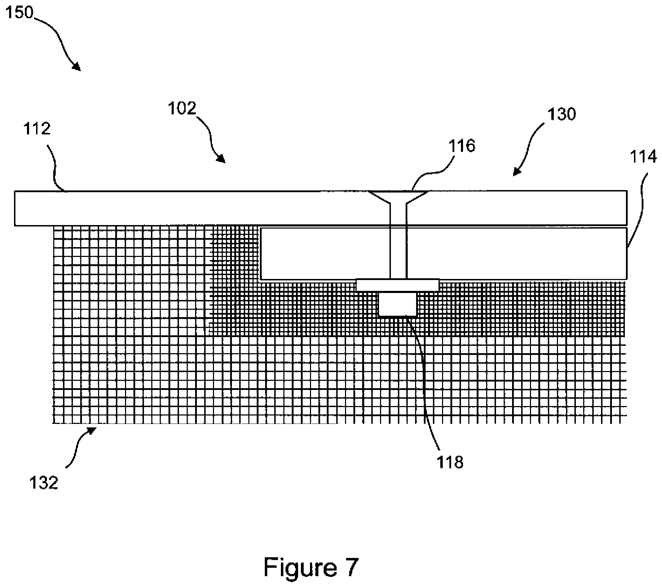

Figure 7 shows an example in which part of the internal structure 114 has been removed. In this example, the lattice 132 is subject to structural loads to support the fuel tank 102 instead of the internal structure 114. In this example, the lattice 132 may span between two sides of the fuel tank 102 and be coupled with the two sides of the fuel tank. In other words, the lattice 132 may act like a structural beam and be subject to compressive/tensile forces and bending moments. In another example, the lattice 132 may extend throughout all of the fuel tank 102 and transfer loads from the top of the fuel tank 102 through to the bottom of the fuel tank 102, akin to a structural column or a wall. The lattice 132 in this example may be coupled to the skin 112 of the fuel tank 102 via adhesive 138.

As the lattice 132 is able to support structural loads, the internal structure 114 within the fuel tank 102 may be reduced or removed altogether. As such, the usable volume in the fuel tank 102 is increased due to the presence of the lattice 132.

The example shown in Figure 7 in which the internal structure 114 has been removed is particularly useful in the scenario in which the fuel tank may become damaged in use. The lattice 132 may provide a more even support across the fuel tank and enable the aircraft 100 to continue to operate, even if the fuel tank 102 has deformed. The lattice 132 effectively enables the fuel tank 102 to have a relatively high internal volume whilst also still having a high structural strength. Further, the lattice 132 can be shaped so as to go around the other elements in the fuel tank 102, such as the nut and washer arrangement 118.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

**Claims**

1. A fuel tank system comprising:

   a fuel tank; and
   a lattice in the fuel tank for impeding the propagation of a flame front within the fuel tank, the lattice defining a plurality of openings to allow a fluid to pass through.

2. The fuel tank system according to claim 1, wherein the lattice comprises a porosity of between approximately 50% to 95%.

3. The fuel tank system according to claims 1 or 2, wherein lattice is regular.

4. The fuel tank system according to claims 1 or 2, wherein lattice is irregular.

5. The fuel tank system according to any one of the preceding claims, wherein the openings defined by the lattice are between approximately 3mm x 3mm x 3mm to approximately 20mm x 20mm x 20mm.

6. The fuel tank system according to any one of the preceding claims, wherein the lattice is arranged adjacent to a joint within the fuel tank.

7. The fuel tank system according to claim 6, wherein the lattice is finer in a region adjacent to the joint in the fuel tank and coarser in a region further away from the joint.

8. The fuel tank system according to any one of the preceding claims, wherein the lattice is 3D printed.

9. The fuel tank system according to any one of the preceding claims, wherein the lattice comprises one or more of:

   nylon,
   PEEK,
   PET/ PETG,
   Polycarbonate,
   polypropylene,
   PLA,
   ABS,
   ASA,
   a sintered plastic, and/or
   a sintered metal.

10. The fuel tank system according to any one of the preceding claims, wherein the lattice is coated in an electrically conductive substance to dissipate electrostatic charge.

11. The fuel tank system according to any one of the preceding claims, wherein the lattice is adhered to a skin of the fuel tank.

12. The fuel tank system according to any one of the preceding claims, wherein the lattice is configured to provide a structural support to the fuel tank.

13. The fuel tank system according to claim 12, wherein the lattice is configured to span between two sides of the fuel tank.

14. The fuel tank system according to claim 12 or 13, wherein the lattice is configured to span throughout the whole of the fuel tank.

15. An aircraft comprising a fuel tank system according to any one of the preceding claims.

Figure 1

Figure 2

150

112     102     130

116

132     118     114

**Figure 3A**

132     134

136

**Figure 3B**

Figure 4

Figure 5A

Figure 5B

Figure 6

Figure 7

Europäisches
Patentamt

European
Patent Office

Office européen
des brevets

# EUROPEAN SEARCH REPORT

Application Number

EP 20 27 5001

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 141 460 A (STANISTREET HAROLD P ET AL) 27 February 1979 (1979-02-27) * column 2, line 5 - line 23 * | 1,2,4, 6-15 | INV. A62C3/06 B60K15/077 B64D37/32 |
| X | EP 2 256 067 A1 (HUANG XIAODONG [CN]) 1 December 2010 (2010-12-01) * paragraphs [0010] - [0012], [0024], [0030], [0036], [0039]; figures 1,11-13,18,21 * | 1-14 | |
| X | GB 1 341 693 A (SECR DEFENCE) 25 December 1973 (1973-12-25) * page 1, line 77 - page 2, line 97; figure 1 * | 1,2,9, 13,14 | |
| X | GB 1 453 836 A (SECR DEFENCE) 27 October 1976 (1976-10-27) * page 1, line 23 - page 3, line 4; claim 1 * | 1,2,4,5, 9,11,13, 15 | |
| X | GB 1 380 420 A (SECR DEFENCE) 15 January 1975 (1975-01-15) * figure 1 * | 1,2,5, 11,15 | TECHNICAL FIELDS SEARCHED (IPC) A62C B60K B64D |
| X | US 2012/273239 A1 (BRENNAN SUSAN [GB]) 1 November 2012 (2012-11-01) * figures 1,9 * | 1,3,15 | |
| X | US 4 013 190 A (WIGGINS EDWIN W ET AL) 22 March 1977 (1977-03-22) * figure 1.3.4 * | 1,6,15 | |
| X | US 3 650 431 A (STEWART DAN F) 21 March 1972 (1972-03-21) * figure 1 * | 1,4,6 | |

-/--

The present search report has been drawn up for all claims

| Place of search | Date of completion of the search | Examiner |
|---|---|---|
| Munich | 7 July 2020 | Cuiper, Ralf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 845 277 A1**

Europäisches
Patentamt
European
Patent Office
Office européen
des brevets

**EUROPEAN SEARCH REPORT**

Application Number

EP 20 27 5001

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| X | CA 736 802 A (SZEGO JOSEPH) 21 June 1966 (1966-06-21) * figures 1,2,5 * ----- | 1,7 | |
| X | GB 531 610 A (WILLIAM HELMORE) 8 January 1941 (1941-01-08) * page 1, line 40 - line 89; figure 1 * ----- | 1,5,10 | |
| X | CA 705 745 A (NEMETH GYULA) 16 March 1965 (1965-03-16) * figures 1,2,5,5,7,8 * ----- | 1,3,15 | |
| X | US 2018/297714 A1 (WILLIAMS MICHAEL D [US]) 18 October 2018 (2018-10-18) * abstract; figures 1,7 * ----- | 1 | |
| | | | TECHNICAL FIELDS SEARCHED (IPC) |

The present search report has been drawn up for all claims

| Place of search | Date of completion of the search | Examiner |
|---|---|---|
| Munich | 7 July 2020 | Cuiper, Ralf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 27 5001

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2020

| Patent document cited in search report | | Publication date | Patent family member(s) | | Publication date |
|---|---|---|---|---|---|
| US 4141460 | A | 27-02-1979 | DE | 2755763 A1 | 15-06-1978 |
| | | | ES | 465046 A1 | 01-09-1978 |
| | | | FR | 2374054 A1 | 13-07-1978 |
| | | | GB | 1564550 A | 10-04-1980 |
| | | | IT | 1113828 B | 27-01-1986 |
| | | | JP | S6133594 B2 | 02-08-1986 |
| | | | JP | S53125394 A | 01-11-1978 |
| | | | NL | 7713771 A | 16-06-1978 |
| | | | SE | 420703 B | 26-10-1981 |
| | | | US | 4141460 A | 27-02-1979 |
| EP 2256067 | A1 | 01-12-2010 | CN | 101932515 A | 29-12-2010 |
| | | | EP | 2256067 A1 | 01-12-2010 |
| | | | HK | 1142306 A1 | 28-09-2012 |
| | | | WO | 2009100573 A1 | 20-08-2009 |
| GB 1341693 | A | 25-12-1973 | DE | 2102855 A1 | 18-11-1971 |
| | | | FR | 2076929 A5 | 15-10-1971 |
| | | | GB | 1341693 A | 25-12-1973 |
| GB 1453836 | A | 27-10-1976 | BE | 812595 A | 15-07-1974 |
| | | | FR | 2222108 A1 | 18-10-1974 |
| | | | GB | 1453836 A | 27-10-1976 |
| GB 1380420 | A | 15-01-1975 | DE | 2212269 A1 | 05-10-1972 |
| | | | FR | 2129695 A5 | 27-10-1972 |
| | | | GB | 1380420 A | 15-01-1975 |
| US 2012273239 | A1 | 01-11-2012 | NONE | | |
| US 4013190 | A | 22-03-1977 | NONE | | |
| US 3650431 | A | 21-03-1972 | NONE | | |
| CA 736802 | A | 21-06-1966 | NONE | | |
| GB 531610 | A | 08-01-1941 | NONE | | |
| CA 705745 | A | 16-03-1965 | NONE | | |
| US 2018297714 | A1 | 18-10-2018 | US | 2018297714 A1 | 18-10-2018 |
| | | | US | 2018339789 A1 | 29-11-2018 |
| | | | US | 2019055031 A1 | 21-02-2019 |

EPO FORM P0459

For more details about this annex : see Official Journal of the European Patent Office, No. 12/82